# DEMANDE DE BREVET EUROPEEN

(11) **EP 3 159 053 A1**
(43) Date de publication de la demande: **26.04.2017**
(21) Numéro de dépôt: 16194066.3
(22) Date de dépôt: 17.10.2016
(51) Int. Cl.: A63H 27/00, A63H 30/04, G05D 1/00

(54) **DISPOSITIF DE PILOTAGE D'UN DRONE APTE A MAINTENIR DES COMMANDES DE PILOTAGE ET PROCEDE DE COMMANDE ASSOCIE**

(30) Priorité: 19.10.2015 FR 1559927
(71) Demandeur: Parrot Drones, 75010 Paris (FR)
(72) Inventeur: LINE, Martin, 75015 Paris (FR)
(74) Mandataire: Dupuis-Latour, Dominique

(57) **Abrégé**

Un dispositif de pilotage (15) d'un drone (10) comprenant un écran tactile (18) affichant une zone tactile, des moyens pour détecter des signaux émis par la zone tactile, et des moyens pour transformer lesdits signaux détectés en commandes de pilotage, et pour transmettre au drone ces commandes. Le dispositif comprend des moyens de commande, commandés par la zone tactile formant bouton d'activation / désactivation, pour faire basculer le mode de pilotage du drone entre un mode d'activation du système de maintien des commandes dernièrement détectées, mode dans lequel les commandes de pilotage résultent de la transformation des signaux dernièrement détectés avant le basculement vers le mode d'activation, et un mode de désactivation du système de maintien des commandes dernièrement détectées, mode dans lequel lesdites commandes de pilotage résultent de la transformation des signaux courants détectés. L'invention concerne également le procédé de commande d'un drone associé.

## Description

L'invention concerne les dispositifs de pilotage d'un drone et le procédé de pilotage d'un drone.

L'AR.Drone 2.0, le Bebop Drone de Parrot SA, Paris, France ou l'eBee de SenseFly SA, Suisse, sont des exemples typiques de drones. Ils sont équipés d'une série de capteurs (accéléromètres, gyromètres 3 axes, altimètre) et peuvent comprendre au moins une caméra. Ces drones sont pourvus d'un moteur ou de plusieurs rotors entrainés par des moteurs respectifs aptes à être commandés de manière différenciée afin de piloter le drone en attitude et en vitesse. Ces drones sont pourvus d'un système de stabilisation automatique en vol stationnaire dont le principe est décrit dans le document WO 2009/109711 (Parrot).

Ces drones sont pilotés par l'utilisateur au moyen d'un dispositif de pilotage déporté, relié au drone par une liaison radio telle qu'une liaison sans fil de type réseau local *Wi-Fi* (IEEE 802.11) ou *Bluetooth* (marque déposées).

Le drone peut être piloté au moyen d'un dispositif de pilotage comprenant un écran tactile, des moyens émetteurs/récepteurs sans fil, ainsi que des capteurs d'inclinaison deux axes formant capteurs d'attitude du boîtier de l'appareil par rapport à une verticale de référence liée à un référentiel terrestre. L'écran de l'appareil reproduit l'image de la caméra frontale embarquée, transmise par la liaison sans fil, et divers symboles de pilotage et de commande sont superposés à cette image de manière à permettre une activation de ces commandes par contact du doigt de l'utilisateur sur l'écran tactile. L'utilisateur dispose en fait de deux modes de pilotage différents, activables à volonté.

Le premier mode de pilotage, ci-après désigné "mode autopiloté" est le mode de pilotage par défaut, et il met en oeuvre le système de stabilisation automatique et autonome du drone. En d'autres termes, ce mode permet au drone de se stabiliser dans une position en vol, sans déplacement verticale ou horizontale.

Le second mode de pilotage, ci-après désigné "mode réactif" est un mode dans lequel le pilotage du drone est opéré de façon plus directe par l'utilisateur, au moyen d'une combinaison : d'une part, de signaux émis par le détecteur d'inclinaison de l'appareil : par exemple, pour faire avancer le drone l'utilisateur incline son appareil selon l'axe de tangage correspondant, et pour déporter le drone à droite ou à gauche il incline ce même appareil par rapport à l'axe de roulis ; et d'autre part, de commandes disponibles sur l'écran tactile, notamment "montée/descente" (correspondant à une commande des gaz) et "virage à droite/virage à gauche" (pivotement du drone autour d'un axe de lacet).

Le basculement du mode autopiloté au mode réactif se fait par appui du doigt sur un symbole spécifique affiché sur l'écran tactile. L'appui du doigt sur ce symbole provoque l'activation immédiate du mode réactif, qui reste activé tant que le contact du doigt reste maintenu à cet endroit. Le pilotage est alors obtenu par inclinaisons de l'appareil et/ou la manipulation des symboles "montée/descente" et "virage à droite/virage à gauche" affichés sur l'écran tactile.

Le mode autopiloté (par exemple mis en oeuvre de la manière décrite dans le WO 2009/109711 précité) est activé dès que l'utilisateur retire son doigt du symbole correspondant.

Un autre document WO 2010/061099 décrit un dispositif de pilotage d'un drone muni d'un détecteur d'inclinaisons du boitier de pilotage et d'une dalle tactile. Le drone est pourvu d'un système de stabilisation autonome en vol stationnaire en l'absence de toute commande d'un utilisateur. Pour ce faire, le dispositif comprend des moyens formant bouton d'activation / désactivation pour faire basculer alternativement le mode de pilotage du drone dans un mode d'activation / désactivation du système de stabilisation autonome du drone.

Ces manières de procéder permettent un pilotage tout à fait efficace et intuitif ; elles présentent cependant des limitations.

Notamment, l'une des limitations tient au fait qu'un tel dispositif de pilotage ne permet pas de maintenir une même commande de pilotage en continu de sorte à maintenir le drone selon un déplacement particulier. En effet, pour maintenir, par exemple, la courbe de déplacement d'un drone, il est nécessaire à l'utilisateur du drone de maintenir la commande de déplacement sur le dispositif de pilotage, c'est-à-dire maintenir l'inclinaison du dispositif de pilotage ainsi que le contact des doigts sur l'écran tactile sans mouvement de l'utilisateur durant le temps nécessaire pour le drone de réaliser la courbe souhaitée.

Un tel maintien des positions des mains sur un dispositif de pilotage sans bouger est extrêmement difficile et très inconfortable pour l'utilisateur. En outre, il est à noter que le moindre déplacement du dispositif de pilotage ou des mains entraine un déplacement irrégulier du drone. Par conséquent, lors de la réalisation d'une séquence vidéo, la vidéo subit alors un déplacement irrégulier visible par l'homme.

Le but de l'invention est de remédier à ces divers inconvénients, en proposant un dispositif de pilotage d'un drone tel que celui décrit dans le WO 2009/109711 ou WO 2010/061099 précité permettant de maintenir le déplacement du drone selon un déplacement régulier sans que l'utilisateur n'ait à maintenir le dispositif de pilotage et le contact sur l'écran tactile dans une même position.

A cet effet, l'invention propose un dispositif de pilotage d'un drone comprenant :
- un écran tactile affichant au moins une zone tactile,
- des moyens pour détecter des signaux émis par ladite au moins une zone tactile,
- des moyens pour transformer lesdits signaux détectés en commandes de pilotage, et pour transmettre au drone ces commandes de pilotage.

De façon caractéristique, le dispositif comprend des moyens de commande, commandés par ladite zone tactile formant bouton d'activation / désactivation, pour faire basculer alternativement le mode de pilotage du drone entre
- un mode d'activation du système de maintien des commandes dernièrement détectées, mode dans lequel lesdites commandes de pilotage transmises au drone résultent de la transformation des signaux dernièrement détectés avant le basculement vers le mode d'activation, et
- un mode de désactivation du système de maintien des commandes dernièrement détectées, mode dans lequel lesdites commandes de pilotage transmises au drone résultent de la transformation des signaux courants détectés.

Selon diverses caractéristiques subsidiaires :
- le dispositif comprend des moyens de détection d'un niveau de pression appliquée sur la zone tactile.
- lorsque le niveau de pression détectée est supérieur à un niveau de pression prédéterminé, lesdits moyens de commande basculent le mode de pilotage du mode de désactivation du système de maintien des commandes dernièrement détectées au mode d'activation de maintien des commandes dernièrement détectées.
   - L'invention a également pour objet un procédé de commande d'un drone, à partir d'un dispositif de pilotage comprenant un écran tactile affichant au moins une zone tactile,
   - des moyens aptes à détecter au moins un contact d'un doigt d'un utilisateur sur la surface des signaux émis par ladite au moins une zone tactile,
   - des moyens pour transformer lesdits signaux détectés en commandes de pilotage, et pour transmettre au drone ces commandes de pilotage,
   - ce procédé comprenant l'activation de commandes de pilotage par contact et / ou déplacement du doigt à l'emplacement de symboles de pilotage correspondants affichés sur l'écran,

De façon caractéristique, le procédé comprend une étape de commande, commandés par ladite zone tactile formant bouton d'activation / désactivation, pour faire basculer alternativement le mode de pilotage du drone entre
- un mode d'activation du système de maintien des commandes dernièrement détectées, mode dans lequel lesdites commandes de pilotage transmises au drone résultent de la transformation des signaux émis dernièrement détectés avant le basculement vers le mode d'activation, et
- un mode de désactivation du système de maintien des commandes dernièrement détectées, mode dans lequel lesdites commandes de pilotage transmises au drone résultent de la transformation des signaux courants détectés.

Selon diverses caractéristiques subsidiaires avantageuses de ce procédé :
- le procédé comprend en outre les étapes suivantes :
   o affichage sur l'écran d'une icône de pilotage,
      ∘ détection du contact du doigt en un point de contact quelconque d'au moins une zone prédéfinie de l'écran ;
   ∘ détection dudit déplacement du doigt dans la zone prédéfinie ;
   o sur détection dudit déplacement, analyse de la direction et / ou de l'amplitude et / ou de la vitesse dudit déplacement par rapport à la position de l'icône de pilotage et envoi d'une commande de pilotage en fonction du résultat de ladite analyse.
- l'étape d'affichage sur l'écran d'une icône de pilotage comprend l'affichage de ladite icône audit point de contact du doigt.
- le procédé comprend en outre une étape de détection d'un niveau de pression appliquée sur la zone tactile, et si le niveau de pression détecté est supérieur à un seuil de pression prédéterminé, alors l'étape de commande met en oeuvre le mode d'activation du système de maintien des commandes dernièrement détectées.
- le seuil de pression prédéterminé est calculé à partir de la pression moyenne exercée sur la zone tactile depuis la détection du contact du doigt.
- le procédé comprend en outre une étape de détection de la durée de la pression appliquée sur la zone tactile lorsque la pression est supérieure à un seuil de pression prédéterminé et si le niveau de pression détecté est supérieur à un seuil de pression prédéterminé et la durée de pression détectée est supérieure à un seuil de durée prédéterminé, alors l'étape de commande met en oeuvre le mode d'activation du système de maintien des commandes dernièrement détectées.
- le symbole affiché sur l'écran comprend une zone horizontale définissant une première paire de commandes et une zone verticale définissant une seconde paire de commandes,
   ∘ si le niveau de pression détecté est supérieur à un seuil de pression prédéterminé et si la pression détectée est réalisée sur l'une des dites zones, alors l'étape de commande met en oeuvre le mode d'activation du système de maintien des commandes dernièrement détectées relatives à la dite zone sur laquelle la pression est détectée.
- lorsque l'étape de détection d'au moins un contact d'un doigt détecte au moins deux contacts du doigt à un emplacement sensiblement identique dans un intervalle de temps inférieur à une durée prédéterminée, alors l'étape de commande met en oeuvre le mode d'activation du système de maintien des commandes dernièrement détectées.
- lorsque le mode de commande sélectionné est le mode d'activation du système de maintien des commandes dernièrement détectées, le procédé basculera sur le mode de désactivation du système de maintien des commandes dernièrement détection lors de la détection d'un niveau de pression appliqué sur l'écran supérieur à un seuil prédéterminé.

On va maintenant décrire un exemple de mise en oeuvre de la présente invention, en référence aux dessins annexés.
La Figure 1 est une vue d'ensemble montrant le drone et le dispositif de pilotage associé permettant son pilotage.
La Figure 2 est un exemple montrant un dispositif de pilotage conformément à l'invention.
Les Figures 3a, b, et c illustrent une icône de pilotage au début de pilotage, en cours de pilotage et lorsque l'utilisateur a bloqué la commande de pilotage.
La Figure 4 illustre un mode de réalisation particulier d'une icône de pilotage conformément à l'invention.

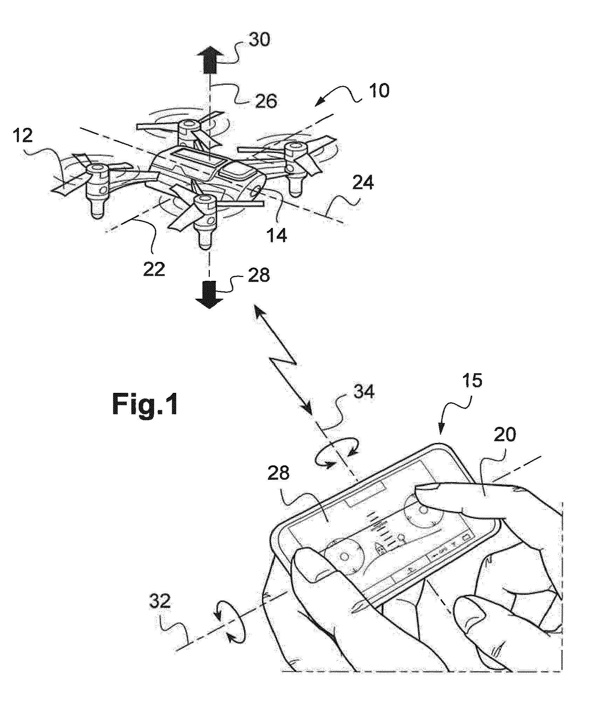

Nous allons maintenant décrire un exemple de réalisation de l'invention. Sur la Figure 1, la référence 10 désigne de façon générale un drone. Selon l'exemple illustré en Figure 1, il s'agit d'un drone de type quadricoptère tel que le modèle *Bebop Drone* de Parrot SA, Paris, France.

Selon un autre exemple de réalisation, il s'agit d'une aile volante telle que le modèle *eBee* de SenseFly SA, Suisse.

Un drone quadricoptère comporte quatre rotors coplanaires 12 dont les moteurs sont pilotés indépendamment par un système intégré de navigation et de contrôle d'attitude. Le drone 10 comporte également une caméra frontale 14 permettant d'obtenir une image de la scène vers laquelle est dirigé le drone.

Selon un exemple de réalisation, le drone est muni de capteurs inertiels (accéléromètres et gyromètres) permettant de mesurer avec une certaine précision les vitesses angulaires et les angles d'attitude du drone, c'est-à-dire les angles d'Euler (tangage ϕ, roulis θ et lacet ψ) décrivant l'inclinaison du drone par rapport à un plan horizontal d'un repère terrestre fixe UVW, étant entendu que les deux composantes longitudinale et transversale de la vitesse horizontale sont intimement liées à l'inclinaison suivant les deux axes respectifs de tangage et de roulis.

Le drone peut être pourvu d'un système de stabilisation autonome en vol stationnaire en l'absence de toute commande de l'utilisateur. Ce système, décrit, par exemple dans le WO 2009/109711 précité, permet notamment d'apporter les corrections nécessaires pour maintenir l'équilibre du point fixe par des commande de *trimming* appropriés, c'est-à-dire des commandes de correction des variations de translation dues aux effets externes tels que le déplacement d'air et la dérive des capteurs. Le déplacement du drone est défini comme un déplacement d'un état stable à un autre état stable, le changement correspondant du point fixe étant opéré par des commandes autonomes. Le système de stabilisation autonome en vol stationnaire consiste à asservir le drone en un point fixe.

Le drone 10 est piloté par un dispositif de pilotage 15 distant tel qu'un téléphone ou une tablette multimédia à écran tactile et accéléromètres intégrés, par exemple un téléphone cellulaire de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10. Selon ce mode de réalisation, l'utilisateur contrôle en temps réel le déplacement du drone 10 via le dispositif de pilotage 15.

Le dispositif de pilotage distant est un appareil pourvu d'un écran tactile 18 affichant l'image captée par la caméra embarquée 14 du drone 10, avec en superposition un certain nombre de symboles permettant l'activation de commandes par simple contact du doigt d'un utilisateur sur l'écran tactile.

Le dispositif de pilotage communique avec le drone 10 via un échange bidirectionnel de données par liaison sans fil de type réseau local Wi-Fi (IEEE 802.11) ou Bluetooth (marques déposées) : du drone 10 vers le dispositif de pilotage 15 notamment pour la transmission de l'image captée par la caméra, et du dispositif de pilotage 15 vers le drone 10 pour l'envoi de commandes de pilotage.

Le pilotage du drone 10 consiste à faire évoluer celui-ci par :
a) rotation autour d'un axe de tangage 22, pour le faire avance ou reculer ; et/ou
b) rotation autour d'un axe de roulis 24, pour le déplacer vers la droite ou vers la gauche ; et/ou
c) rotation autour d'un axe de lacet 26, pour faire pivoter vers la droite ou vers la gauche l'axe principal du drone, donc la direction de pointage de la caméra frontale et la direction de progression du drone ; et/ou
d) translation vers le bas 28 ou vers le haut 30 par changement du régime des gaz, de manière à respectivement réduire ou augmenter l'altitude du drone.

Lorsque ces commandes de pilotage sont appliquées directement par l'utilisateur à partir du dispositif de pilotage 15 (pilotage dit en "mode réactif"), les commandes a) et b) de pivotement autour des axes de tangage 22 et de roulis 24 sont obtenues de façon intuitive par inclinaison du dispositif de pilotage 15 respectivement autour de l'axe longitudinal 32 et de l'axe transversal 34 : par exemple, pour faire avancer le drone il suffit d'incliner l'appareil vers l'avant autour de l'axe 32, pour le déporter à droite il suffit d'incliner l'appareil autour de l'axe 34 vers la droite, etc.

Les commandes c) et d), quant à elles, résultent d'actions appliquées par contact d'un doigt 20 de l'utilisateur sur un ou des zones spécifiques correspondantes de l'écran tactile 18.

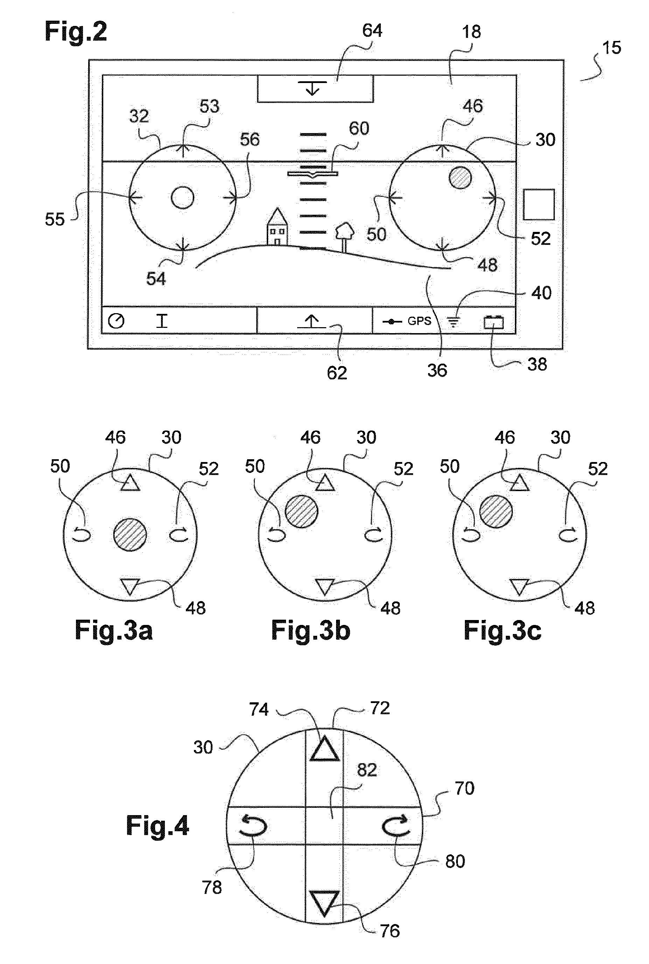

La Figure 2 illustre les différentes images et symboles affichés sur l'écran 18 du dispositif de pilotage 15.

L'écran 18 reproduit la scène 36 captée par la caméra frontale 14 du drone, avec en superposition sur cette image un certain nombre de symboles 30 à 64 qui sont affichés pour délivrer des informations sur le fonctionnement du drone, et pour permettre par activation tactile l'envoi de commandes de pilotage correspondantes.

Ainsi, en surimpression de la scène 36 captée et visualisée sur l'écran 18 du dispositif de pilotage, sont illustrées deux icônes de pilotage 30 et 32. Toutefois, selon une alternative de réalisation, une seule icône de pilotage 30 ou 32 peut être positionnée sur l'écran au-dessus de la scène captée et affichée.

L'appareil affiche ainsi en 38 des informations concernant l'état de la batterie et en 40 le niveau du signal de la liaison entre l'appareil et le drone.

Pour le pilotage en mode réactif, l'utilisateur dispose, outre les commandes générées par des inclinaisons de l'appareil, de commandes tactiles insérées dans une ou plusieurs zones tactiles illustrées en partie par les icônes de pilotage 30 et 32 avec notamment des flèches de montée 46 / descente 48 et de rotation en lacet à gauche 50 / à droite 52 et des flèches d'avance 53 et de recul 54 et de déplacement en translation vers la gauche 55 et vers la droite 56 dans les icônes de pilotage 30 et 32. L'utilisateur dispose également de l'affichage d'un collimateur 60 donnant la direction de pointage de la caméra embarquée, et donc de l'axe principal du drone.

Il est également prévu divers symboles additionnels tels que la commande automatique de décollage / atterrissage en 62, et le déclenchement d'une procédure d'urgence en 64.

Selon un mode de réalisation particulier, les inclinaisons du dispositif de pilotage sont détectées, par exemple au moyen d'un détecteur d'inclinaisons du dispositif.

En outre, le dispositif de pilotage comprend des moyens pour détecter des signaux émis par une ou plusieurs zones tactiles de l'écran 18 lors d'un contact par un utilisateur.

Dans le mode de réalisation particulier correspondant, les moyens pour détecter des signaux détectent également les signaux émis par le détecteur d'inclinaisons.

Les signaux détectés sont transformés par des moyens pour transformer ces signaux en commandes de pilotage. Ces moyens permettent également de transmettre au drone les commandes de pilotage.

On entend par commandes de pilotage, l'ensemble des instructions émises au drone, notamment relative à une instruction de montée ou de descendre et / ou une instruction de virage à droite ou à gauche selon un angle donné et / ou une instruction de déplacement horizontale vers la gauche ou vers la droite, etc.

En Figure 2, il est montré deux icônes de pilotage 30 et 32 positionnées respectivement dans une première zone tactile à droite de l'écran 18 et dans une deuxième zone tactile à gauche de l'écran 18 du dispositif de pilotage 15.

Toutefois, selon un autre mode de réalisation, le contact du doigt de l'utilisateur sur un point quelconque d'une zone tactile de l'écran va permettre l'affichage d'une icône de pilotage 30 ou 32 à l'endroit de contact du doigt. En particulier, l'icône de pilotage sera centrée autour du point de contact du doigt de l'utilisateur.

Selon ce mode de réalisation, le contact du doigt sur un point quelconque de la zone de l'écran tactile va produire les actions suivantes :
- Relève des données des capteurs d'inclinaison de l'appareil, pour déterminer l'inclinaison de celui-ci (position selon les deux axes de tangage 32 et de roulis 34 par rapport à la verticale absolue dans un référentiel terrestre) au moment de l'entrée en contact du doigt, et définition de cette position comme la nouvelle position neutre pour l'application ultérieure de commandes par inclinaisons,
- Affichage de l'icône sous le doigt de l'utilisateur,
- Mise à disposition sous le doigt de l'utilisateur de commandes de pilotage, par exemple de commande de montée / descente et de rotation à gauche / rotation à droite.

Cet état dure tant que le doigt reste appuyé sur la zone, immobile ou en déplacement.

Dès que le contact du doigt est relâché, les actions inverses des précédentes seront exécutées.

Lorsque l'utilisateur relâche le doigt de l'écran, le dispositif de pilotage 15 émet une commande de positionnement du drone en vol stationnaire. Conformément à l'invention, le dispositif de pilotage du drone comprend en outre des moyens de commande, commandés par une ou plusieurs zones tactiles formant bouton d'activation / désactivation, pour faire basculer alternativement le mode de pilotage du drone entre :
- un mode d'activation du système de maintien des commandes dernièrement détectées, mode dans lequel lesdites commandes de pilotage transmises au drone résultent de la transformation des signaux dernièrement détectés avant le basculement vers le mode d'activation, et
- un mode de désactivation du système de maintien des commandes dernièrement détectées, mode dans lequel lesdites commandes de pilotage transmises au drone résultent de la transformation des signaux courants détectés sur le dispositif de pilotage 15.

Ces moyens de commande commandant par exemple le basculement d'un mode désactivé vers un mode activé du système de maintien des commandes dernièrement détectées, permettent à l'utilisateur de commander le dispositif de pilotage afin que celui-ci maintienne les commandes de pilotage dernièrement détectées avant le basculement vers le mode d'activation sans avoir à maintenir le dispositif de pilotage selon une inclinaison donnée ni un maintien des doigts de l'utilisateur sur l'écran 18 du dispositif de pilotage 15.

Le maintien des commandes dernièrement détectées permet également au drone de poursuivre sa direction de manière régulière, par exemple pour réaliser une courbe sans interruption ni irrégularité.

Ces moyens de commandes activant le système de maintien des commandes dernièrement détectées peuvent être modifiés afin de basculer dans un mode désactivé du système de maintien des commandes, permettant à l'utilisateur de reprendre le contrôle du pilotage du drone.

Un tel dispositif de pilotage 15 comprend un procédé de commande d'un drone, lequel comprend une étape de commande, commandés par ladite zone tactile formant bouton d'activation / désactivation, pour faire basculer alternativement le mode de pilotage du drone entre
- un mode d'activation du système de maintien des commandes dernièrement détectées, mode dans lequel lesdites commandes de pilotage transmises au drone résultent de la transformation des signaux émis dernièrement détectés avant le basculement vers le mode d'activation, et
- un mode de désactivation du système de maintien des commandes dernièrement détectées, mode dans lequel lesdites commandes de pilotage transmises au drone résultent de la transformation des signaux courants détectés.

Le procédé comprend une étape de détection du contact du doigt en un point de contact quelconque dans au moins une zone tactile prédéfinie de l'écran et de détection du déplacement du doigt dans la zone tactile prédéfinie.

En outre, le procédé comprend l'affichage sur l'écran 18 d'au moins une icône de pilotage 30, 32. L'affichage de l'icône de pilotage est réalisé soit par surimpression avec la scène 36 captée soit par mixage de l'icône de pilotage avec la scène captée.

Selon un premier mode de réalisation de cet affichage d'une ou plusieurs icônes de pilotage, cet affichage est réalisé à une localisation figée et déterminée sur l'écran 18 du dispositif de pilotage 15.

Selon une alternative de réalisation, l'affichage d'une icône de pilotage est réalisé lors de la détection du contact d'un doigt de l'utilisateur sur l'écran 18 du dispositif de pilotage 15, notamment de manière centrée par rapport au point de contact détecté.

A partir des signaux détectés du fait du contact du doigt sur l'écran 18, le procédé analyse la direction et / ou l'amplitude et / ou la vitesse dudit déplacement par rapport à la position de l'icône de pilotage et envoi des commandes de pilotage en fonction du résultat de cette analyse.

Selon un mode de réalisation particulier de l'invention, le procédé comprend en outre une étape de détection d'un niveau de pression appliquée par le doigt de l'utilisateur sur la zone tactile de l'écran 18.

Pour ce faire, le dispositif de pilotage 15 comprend des moyens de détection d'un niveau de pression appliquée sur la zone tactile de l'écran 18 du dispositif 15.

Si le niveau de pression détecté est supérieur à un seuil de pression prédéterminé, alors l'étape de commande bascule d'un premier mode de fonctionnement du système de maintien des commandes vers le second mode de fonctionnement du système de maintien des commandes. Par exemple l'étape de commande bascule du mode désactivé du système de maintien des commandes dernièrement détectées vers le mode activé du système de maintien des commandes dernièrement détectées avant le basculement vers le mode activé.

Ainsi, la détection d'une pression importante, notamment supérieure à un niveau prédéterminé, sur la zone tactile de l'écran est analysée comme une commande de basculement du mode de fonctionnement, à savoir activé ou désactivé, du système de maintien des commandes dernièrement détectées avant le basculement vers le mode activé.

Une pression détectée supérieure à un niveau prédéterminé entraîne par exemple l'activation du système de maintien des commandes dernièrement détectées avant le basculement vers le mode d'activation et donc un blocage des dernières commandes demandées par l'utilisateur juste avant le basculement du mode d'activation afin que le drone poursuive son déplacement conformément aux dernières commandes demandées par l'utilisateur et détectées par le dispositif de pilotage 15. L'utilisateur peut alors relâcher la pression appliquée sur la zone tactile du dispositif de pilotage et laisser évoluer le drone conformément aux commandes dernièrement détectées. Le drone poursuit ainsi son déplacement courant jusqu'à ce que l'utilisateur reprenne le contrôle du déplacement du drone sur le dispositif de pilotage 15.

Tel qu'illustré en Figures 3 a. à 3 c. il est monté une icône de pilotage 30 telle qu'elle est affichée sur l'écran 18 du dispositif de pilotage 15 en cours d'utilisation par un utilisateur.

La Figure 3 a. illustre l'affichage sur l'écran 18 d'une icône de pilotage 30 au point de contact du doigt sur la zone tactile. En effet, le cercle grisé correspond au point de contact du doigt, l'icône étant positionnée de manière centrée au regard de la position de contact du doigt. L'icône de pilotage comprend par exemple un ordre de « montée » 46, un ordre de « descente » 48, un ordre de « virage en lacet à gauche » 50 et un ordre de « virage en lacet à droite » 52.

Tel qu'illustré en figure 3 b., afin de piloter le drone, l'utilisateur déplace son doigt dans l'icône de pilotage 30 par exemple vers le haut à gauche comme illustré par le cercle grisé. Selon cette nouvelle position du doigt, le dispositif de pilotage 15 va générer des commandes permettant de faire monter le drone et simultanément le faire tourner vers la gauche. Ainsi, le drone exécute un léger virage vers la gauche tout en prenant de l'altitude. Afin de maintenir ces commandes de pilotage, l'utilisateur exerce au moyen de son doigt une pression plus élevée sur la zone tactile de l'écran du dispositif de pilotage à l'endroit des commandes de pilotage qu'il souhaite bloquer de sorte que ces commandes de pilotage continuent d'être appliquées pour piloter le drone.

Afin de visualiser les commandes de pilotage maintenues, un indicateur visuel est représenté sur l'icône de pilotage tel qu'illustré en Figure 3. c) et en Figure 2, par exemple, un cercle hachuré illustrant les commandes maintenues est représenté à l'endroit où la pression du doigt a été exercée.

Lors de la mise en oeuvre du mode activé du système de maintien des commandes dernièrement détectées avant le basculement vers le mode d'activation, les commandes de pilotage correspondantes sont envoyées au drone régulièrement tant que le mode activé de maintien de la commande de pilotage est sélectionné. De la sorte, le drone poursuit son déplacement de manière continue et régulière.

Selon une alternative de réalisation, une commande spécifique est envoyée au drone de manière à lui indiquer que les commandes dernièrement envoyées doivent être maintenues jusqu'à la réception d'une autre commande. Ainsi, selon cette alternative de réalisation, le dispositif de pilotage envoie une seule commande et non une multitude de commandes identiques.

Comme discuté précédemment, lorsqu'un niveau de pression exercé sur la zone tactile est supérieur à un seuil de pression prédéterminé, le procédé de pilotage bascule du mode désactivé du système de maintien des commandes dernièrement détectées vers le mode d'activation du système de maintien des commandes dernièrement détectées avant le basculement vers le mode d'activation.

Selon un mode de réalisation particulier, le seuil de pression prédéterminé est calculé à partir de la pression moyenne exercée par l'utilisateur sur la zone tactile de l'écran depuis la détection du contact du doigt sur l'écran, notamment sur la zone tactile.

Selon un exemple particulier de réalisation, le procédé comprend une étape de détection d'un niveau de pression appliquée sur une zone tactile de l'écran et une étape de comparaison de ce niveau de pression à un niveau de pression prédéterminé, cette étape étant suivie d'une étape de détection d'une absence de contact dudit doigt sur l'écran intervenant sensiblement à la suite de l'application d'un niveau de pression important afin de basculer du mode désactivé du système de maintien des commandes dernièrement détectées vers le mode activé du système de maintien des commandes dernièrement détectées avant le basculement vers le mode d'activation.

Selon cet exemple de réalisation, l'utilisateur applique une pression importante sur la zone tactile de l'écran suivi d'un retrait du doigt de l'écran afin de basculer du mode désactivé vers le mode activé de maintien des commandes dernièrement détectées.

Selon un deuxième mode de réalisation, le procédé de pilotage comprend une étape de détection de la durée de la pression du doigt sur la zone tactile de l'écran lorsque le niveau de pression est supérieur à un seuil prédéterminé. Si le niveau de pression détecté du doigt sur la zone tactile est supérieur à un seuil de pression prédéterminé et si la durée de pression détectée est supérieure à un seuil de durée prédéterminé, alors l'étape de commande met en oeuvre le mode d'activation du système de maintien des commandes dernièrement détectées avant le basculement vers le mode d'activation.

Selon ce deuxième mode de réalisation, il est détecté une forte pression appliquée sur la zone tactile de l'écran ainsi que le maintien de cette pression élevée durant une durée donnée. La forte pression appliquée sur la zone tactile de l'écran durant une durée donnée entraine une commande de basculement du mode de pilotage du mode désactivé du système de maintien des commandes dernièrement détectées vers le mode activé du système de maintien des commandes dernièrement détectées avant le basculement vers le mode d'activation.

En référence aux Figures 3 b. et c., le basculement, du mode de pilotage dans lequel le système de maintien des commandes est désactivé au mode de pilotage dans lequel le système de maintien des commandes dernièrement détectées est activé, est réalisé par la détection d'un niveau déterminé de pression sur la zone tactile de l'écran durant une durée prédéterminée. La durée prédéterminée est de plusieurs millisecondes par exemple 50 millisecondes.

Selon un troisième mode de réalisation, l'icône affiché 30 sur l'écran comprend une zone horizontale prédéfinie 70 définissant une première paire de commandes et une zone verticale prédéfinie 72, définissant une seconde paire de commandes telles qu'illustré par exemple sur la Figure 4. La première paire de commandes définit par exemple un ordre de « virage en lacet à gauche » 78 et un ordre de « virage en lacet à droite » 80 et la seconde paire de commandes définit par exemple un ordre de « montée » 74 et un ordre de « descente » 76.

Selon ce mode de réalisation, le procédé détecte d'une part la pression exercée par l'utilisateur sur la zone tactile de l'écran et d'autre part la localisation dans l'icône de cette pression, en particulier si la pression est exercée dans la zone horizontale prédéfinie 70 ou dans la zone verticale prédéfinie 72. Ainsi, si le niveau de pression détecté est supérieur à un seuil de pression prédéterminé et si la pression détectée est réalisée sur l'une des zones prédéfinies 70, 72, alors l'étape de commande met en oeuvre le mode d'activation du système de maintien des commandes dernièrement détectées relatives à l'une des zones prédéfinies 70 ou 72 de manière à bloquer une paire de commandes correspondant à la zone prédéfinie dans laquelle la pression importante a été détectée, l'utilisateur gardant le contrôle du déplacement du drone selon la seconde paire de commandes non bloquée.

Selon ce mode de réalisation, lorsque l'utilisateur pilote le drone, il positionne au moins un doigt sur la zone tactile de l'écran. L'icône de pilotage s'affiche alors sous le doigt de l'utilisateur. Notamment la partie centrale 82 de l'icône de pilotage apparait sous le doigt de l'utilisateur.

Ensuite, l'utilisateur déplace son doigt sur la zone tactile de l'écran de sorte à commander le drone, par exemple commander une prise d'altitude, effectuer un virage, etc. Lorsque l'utilisateur applique une pression sur la zone tactile de l'écran au moyen de son doigt supérieure à un seuil de pression prédéterminé alors le procédé détecte l'emplacement du point de pression du doigt.

Si l'emplacement du point de pression est localisé dans la zone verticale prédéfinie 74 ou dans la zone horizontale prédéfinie 72 tel qu'illustré dans la Figure 4, alors seule la paire de commandes respectivement de la zone prédéfinie dans laquelle la pression est exercée va être maintenue, autrement dit bloquée. En d'autres termes, il y aura basculement du mode désactivé du système de maintien des commandes vers le mode activé du système de maintien de la paire de commandes dernièrement détectées avant le basculement vers le mode d'activation correspondant à la zone sur laquelle a été réalisée la pression.

Ainsi, par exemple, si la pression du doigt de l'utilisateur est réalisée dans la zone horizontale prédéfinie 70 alors les commandes dernièrement détectées correspondant aux commandes de déplacement du drone selon un virage en lacet à droite ou à gauche et selon un degré particulier, vont être maintenues et l'utilisateur garde le contrôle du pilotage du drone selon la seconde paire de commandes, à savoir la possibilité de commander l'altitude du drone et la vitesse d'un tel déplacement.

Selon un quatrième mode de réalisation, le procédé conformément à l'invention détecte l'application d'au moins deux contacts successifs du doigt de l'utilisateur à un emplacement sensiblement identique sur la zone tactile de l'écran et ensuite bascule le mode de pilotage du mode désactivé du système de maintien des commandes dernièrement détectées vers le mode activé du système de maintien des commandes dernièrement détectées avant le basculement vers le mode d'activation.

Selon ce mode de réalisation, l'utilisateur commande le pilotage du drone par déplacement de son doigt sur une zone tactile de l'écran puis va enlever son doigt de l'écran puis réappliquer un contact sur l'écran de sorte que le procédé détecte le toucher multiple du doigt sur l'écran. Sur une telle détection, le mode de pilotage selon le mode d'activation du système de maintien des commandes dernièrement détectées est mis en oeuvre, les commandes dernièrement détectées correspondant aux commandes déterminées au regard de l'emplacement du doigt de l'utilisateur sur la zone tactile de l'écran juste avant le basculement vers le mode activé. Selon un exemple de réalisation, l'intervalle de temps entre la dernière application du doigt sur la zone tactile de l'écran et le toucher suivant du doigt est inférieur à 0,5 seconde afin que le procédé détecte un toucher multiple de l'écran.

Selon un mode de réalisation particulier, lorsque l'utilisateur effectue un toucher multiple, alors les commandes considérées comme les dernières commandes détectées correspondent aux commandes déterminées au regard de l'emplacement du doigt dans la zone tactile de l'écran avant l'exécution des touchers successifs.

Afin de basculer du mode de pilotage du mode activé du système de maintien des commandes dernièrement détectées vers le mode désactivé du système de maintien des commandes dernièrement détectées, le procédé doit détecter par exemple un niveau de pression appliquée sur l'écran supérieur à un seuil de pression prédéterminé.

Ainsi, l'utilisateur, souhaitant reprendre la commande du drone, applique sur l'écran une pression supérieure à un seuil de pression prédéterminé.

## Revendications

1. Dispositif de pilotage (15) d'un drone (10) comprenant :
- un écran tactile (18) affichant au moins une zone tactile,
- des moyens pour détecter des signaux émis par ladite au moins une zone tactile,
- des moyens pour transformer lesdits signaux détectés en commandes de pilotage, et pour transmettre au drone ces commandes de pilotage,
**caractérisé en ce qu'**il comprend des moyens de commande, commandés par ladite zone tactile formant bouton d'activation / désactivation, pour faire basculer alternativement le mode de pilotage du drone entre
- un mode d'activation du système de maintien des commandes dernièrement détectées, mode dans lequel lesdites commandes de pilotage transmises au drone résultent de la transformation des signaux dernièrement détectés avant le basculement vers le mode d'activation, et
- un mode de désactivation du système de maintien des commandes dernièrement détectées, mode dans lequel lesdites commandes de pilotage transmises au drone résultent de la transformation des signaux courants détectés.

2. Dispositif de pilotage selon la revendication précédente, **caractérisé en ce qu'**il comprend des moyens de détection d'un niveau de pression appliquée sur la zone tactile.

3. Dispositif de pilotage selon la revendication précédente, **caractérisé en ce que** lorsque le niveau de pression détectée est supérieur à un niveau de pression prédéterminé, lesdits moyens de commande basculent le mode de pilotage du mode de désactivation du système de maintien des commandes dernièrement détectées au mode d'activation de maintien des commandes dernièrement détectées.

4. Procédé de commande d'un drone (10), à partir d'un dispositif de pilotage (15) comprenant :
- un écran tactile (18) affichant au moins une zone tactile,
- des moyens aptes à détecter au moins un contact d'un doigt d'un utilisateur sur la surface des signaux émis par ladite au moins une zone tactile,
- des moyens pour transformer lesdits signaux détectés en commandes de pilotage, et pour transmettre au drone ces commandes de pilotage,
- ce procédé comprenant l'activation de commandes de pilotage par contact et / ou déplacement du doigt à l'emplacement de symboles de pilotage correspondants affichés sur l'écran,
**caractérisé en ce que** le procédé comprend une étape de commande, commandés par ladite zone tactile formant bouton d'activation / désactivation, pour faire basculer alternativement le mode de pilotage du drone entre
- un mode d'activation du système de maintien des commandes dernièrement détectées, mode dans lequel lesdites commandes de pilotage transmises au drone résultent de la transformation des signaux émis dernièrement détectés avant le basculement vers le mode d'activation, et
- un mode de désactivation du système de maintien des commandes dernièrement détectées, mode dans lequel lesdites commandes de pilotage transmises au drone résultent de la transformation des signaux courants détectés.

5. Procédé de commande d'un drone selon la revendication précédente, **caractérisé en ce que** le procédé comprend en outre les étapes suivantes :
- affichage sur l'écran (18) d'une icône de pilotage (30, 32),
- détection du contact du doigt en un point de contact quelconque d'au moins une zone prédéfinie de l'écran ;
- détection dudit déplacement du doigt dans la zone prédéfinie ;
- sur détection dudit déplacement, analyse de la direction et / ou de l'amplitude et / ou de la vitesse dudit déplacement par rapport à la position de l'icône de pilotage et envoi d'une commande de pilotage en fonction du résultat de ladite analyse.

6. Procédé de commande d'un drone selon la revendication précédente, **caractérisé en ce que** l'étape d'affichage sur l'écran d'une icône de pilotage comprend l'affichage de ladite icône audit point de contact du doigt.

7. Procédé de commande d'un drone selon l'une des revendications 4 à 6, **caractérisé en ce que** le procédé comprend en outre une étape de détection d'un niveau de pression appliquée sur la zone tactile, et si le niveau de pression détecté est supérieur à un seuil de pression prédéterminé, alors l'étape de commande met en oeuvre le mode d'activation du système de maintien des commandes dernièrement détectées.

8. Procédé de commande d'un drone selon la revendication précédente, **caractérisé en ce que** le seuil de pression prédéterminé est calculé à partir de la pression moyenne exercée sur la zone tactile depuis la détection du contact du doigt.

9. Procédé de commande d'un drone selon l'une des revendications 7 à 8, **caractérisé en ce que** le procédé comprend en outre une étape de détection de la durée de la pression appliquée sur la zone tactile lorsque la pression est supérieure à un seuil de pression prédéterminé et si le niveau de pression détecté est supérieur à un seuil de pression prédéterminé et la durée de pression détectée est supérieure à un seuil de durée prédéterminé, alors l'étape de commande met en oeuvre le mode d'activation du système de maintien des commandes dernièrement détectées.

10. Procédé de commande d'un drone selon l'une des revendications 7 à 9, **caractérisé en ce que** le symbole affiché sur l'écran comprend une zone horizontale définissant une première paire de commandes et une zone verticale définissant une seconde paire de commandes,
- si le niveau de pression détecté est supérieur à un seuil de pression prédéterminé et si la pression détectée est réalisée sur l'une des dites zones, alors l'étape de commande met en oeuvre le mode d'activation du système de maintien des commandes dernièrement détectées relatives à la dite zone sur laquelle la pression est détectée.

11. Procédé commande d'un drone selon l'une des revendications 5 à 6, **caractérisé en ce que** lorsque l'étape de détection d'au moins un contact d'un doigt détecte au moins deux contacts du doigt à un emplacement sensiblement identique dans un intervalle de temps inférieur à une durée prédéterminée, alors l'étape de commande met en oeuvre le mode d'activation du système de maintien des commandes dernièrement détectées.

12. Procédé de commande d'un drone selon l'une des revendications 4 à 11, **caractérisé en ce que** lorsque le mode de commande sélectionné est le mode d'activation du système de maintien des commandes dernièrement détectées, le procédé basculera sur le mode de désactivation du système de maintien des commandes dernièrement détection lors de la détection d'un niveau de pression appliqué sur l'écran supérieur à un seuil prédéterminé.
